# EUROPÄISCHE PATENTSCHRIFT

(11) **EP 1 621 275 B1**
(45) Veröffentlichungstag und Bekanntmachung des Hinweises auf die Patenterteilung: **10.09.2008**
(21) Anmeldenummer: 05015111.7
(22) Anmeldetag: 05.11.2004
(51) Int. Cl.: B23B 51/02

(54) **Bohrplatte welche klemmend in einem Grundkörper befestigt ist**
Drilling insert which is clamped in a body
Plaquette de forage qui est tenu serré dans un corps de base

(30) Priorität: 14.11.2003 DE 10353514
(43) Veröffentlichungstag der Anmeldung: 01.02.2006
(62) Teilanmeldung aus: 04026294.1
(73) Patentinhaber: Heule, Ulf, 9436 Balgach (CH)
(72) Erfinder: Heule, Heinricht, 9434 Au (CH); Studer, Harry, 9436 Balgach (CH)
(74) Vertreter: Riebling, Peter

(56) Entgegenhaltungen:
- US-A- 4 744 704
- US-A- 4 950 108

## Beschreibung

Die Erfindung betrifft eine Bohrplatte zur spanabhebenden Bearbeitung von Materialien mit einer klemmenden Befestigung in einem drehend angetriebenen Grundkörper nach dem Oberbegriff des Patentanspruchs 1, wie sie z. Bsp. aus der US 4 744 704 bekannt ist.

Eine Bohrplatte zur spanabhebenden Bearbeitung von Materialien mit einer klemmenden Befestigung in einem Grundkörper ist beispielsweise mit dem Gegenstand der DE 197 36 598 C2 bekannt geworden. Dort bildet die obere Stirnseite des Grundkörpers eine nach oben geöffnete Nut, in welche die Bohrplatte einsetzbar ist. Im Grund der Nut ist ein Spannschlitz angeordnet, der von einer zugeordneten Spannschraube durchsetzt ist.

Die Bohrplatte weist diametral einander gegenüberliegende Anschlagflächen auf, die beim Gegenstand der DE 197 36 598 C2 einstellbar ausgebildet sind. Sie werden durch Gewindeschrauben gebildet, die in zugeordneten Spannbacken im Grundkörper sitzen und dort einstellbar ausgebildet sind. Ihr bolzenseitiges Ende stützt sich an diametral aneinander gegenüberliegenden Anschlagflächen an der Bohrplatte ab.

Nachteil der bekannten Anordnung ist, dass die Hauptschneide der Bohrplatte nicht konvex ausgebildet ist und somit ein vorteilhafter Spanbruch auf Grund einer schälenden Schnittbewegung nicht gewährleistet ist, damit eine eventuelle Verletzungsgefahr durch einen relativ lang gebildeten Span vermieden wird.

Ein weiterer Nachteil der vorbenannten Erfindung ist, dass die Spanfläche der Bohrplatte derart ausgebildet ist, dass eine vorteilhafte Spanabfuhr nicht gewährleistet ist.

Des Weiteren ist der vorbenannten Erfindung nicht zu entnehmen, dass die Bohrplatte einen fließenden Übergang zum Grundkörper aufweist, um den Grundkörper vor eventuell auftretenden Erosionen durch ablaufende Späne zu schützen.

Darüber hinaus werden die entsprechenden Zerspanungskräfte, welche auf die Bohrplatte wirken, auf die Spannbacken des Grundkörpers übertragen, wodurch diese relativ stark auf Abscherung beansprucht werden.

Nachdem die Spannbacken noch durch den sich von Nutengrund aus nach unten erstreckenden Spannschlitz geschwächt sind, besteht bei höheren Beanspruchungen die Gefahr, dass die Spannbacken unbeabsichtigt abscheren.

Problematisch und von Nachteil ist die Verstellmöglichkeit der Einstellelemente in der vorbenannten Erfindung, da diese unbeabsichtigt (oder auch willkürlich) verstellt werden können, was zu einer Dejustierung der zentrierten Lage der Bohrplatte im Grundkörper führt und eine mit einem relativ hohen Aufwand versehene erneute Justierung zur Folge hat.

Mit der Druckschrift US 4,477,704 A wird ein Bohrer offenbart, der einen Bohrkörper und eine Bohrerspitze aufweist. Die Bohrerspitze ist lösbar in einer Nut befestigt. Die Bohrerspitze besteht aus einem Spitzenkörper und einer Schneidplatte. Der Bohrkörper und der Spitzenkörper weisen eine zusammenwirkende Oberfläche auf, um die Radial- und Axialkräfte aufzunehmen, welche auf die Scheidplatte wirken.

Mit der Druckschrift US 4,950,108 A wird ein Metallbohrer offenbart, der einen Bohrkörper und eine entfernbare Bohrerspitze aufweist. Die Bohrerspitze trägt Schneidelemente und ist lösbar an dem Bohrkörper mittels Befestigungsmittel befestigt, welche an gegenüberliegenden Seiten der Mittellinie des Bohrers angeordnet sind. Eine hintere Oberfläche des Bohrers ist mit einer mittigen und mindestens teilweise konischen Ausnehmung versehen, welche zur Aufnahme eines mittigen Zapfens ausgebildet ist, der sich vorwärts von einer vornehmlich planen Stirnoberfläche des Bohrers erstreckt, um die Bohrspitze in Bezug auf den Bohrkörper zu zentrieren. Der Zapfen nimmt die teilweise konischen Ausnehmungen auf und beinhaltet ein elastisches Teil, dass dem Zapfen eine axiale Führung ermöglicht.

Mit der Druckschrift US 4.222,690 wird ein Bohrer mit einem s-förmigen Übergang der Schneidkante im Zentrum des Bohrers offenbart, wobei der s-förmige Übergang gekurvte Flächen der Schneidkante vom Drehmittelpunkt des Bohrers aufweist, welche sich nach außen auf die geradlinig verlaufende Schneidkante erstrecken.
Diese Druckschrift weist ebenfalls den Nachteil auf, dass die Schneidkanten nach dem s-förmigen Übergang des Mittenbereichs nicht konvex ausgebildet sind und in einen konkav ausgebildeten Spanableitungsbereich übergehen, um einen günstigen Spanbruch auszubilden.

Dieser Druckschrift ist zu entnehmen, dass die Schneidkante auswärts gerichtet gebogen ist, und zwar im Hinblick auf die Drehrichtung des Bohrers, mit einer Biegung, die sich von der äußeren Peripherie des Bohrers auf das Zentrum hin erstreckt.

Dies zeigt jedoch einen anderen Gegenstand als die vorliegende Erfindung.

Hier ist lediglich der s-förmige Übergang der Schneidkante im Zentrum des Bohrers gezeigt, wie dies beispielsweise in Figur der genannten Druckschrift gut zu erkennen ist. Dort ist gut zu erkennen, dass sich von dem Drehmittelpunkt (Spitze) des Bohrers gekurvte Flächen der Schneidkante nach außen erstrecken, die jedoch dann in einer gerade Kante der Schneidkante einlaufen.

Es wird somit lediglich offenbart, dass die Schneidkante des s-förmigen Mittenbereich des Bohrers gekurvt ist, und zwar in Richtung der Drehrichtung des Bohrers über die Spitze.

Des Weiteren weist die vorbenannte Druckschrift eingelötete Hartmetallplatten auf.

Der Offenbarungsgehalt der vorliegenden Erfindung umfasst eine Bohrplatte, wobei in einen Halter auswechselbare plattenförmige Elemente gehalten sind.
Dies hat den Vorteil, dass bei einem Verschleiß der plattenförmigen Elemente diese auswechselbar sind.

Nachteilig ist auch, dass die in den Halter oder den Bohrer eingelötete Schneidplatte zum Stand der Technik erst nach dem Einlöten entsprechend zugeschliffen wird, was dazu führt, dass relativ große Aufnahmeräume für das Halten der Schneidplatte vorgesehen werden müssen. Durch das nachträgliche Beschleifen der plattenförmigen Elemente müssen große Freiräume geschaffen werden, um eine entsprechende Bearbeitung vorzusehen.

Die ist auswechselbaren Schneidplatten (plattenförmigen Elemente) der vorliegenden Erfindung sind und die außerhalb des Halters geschliffen werden.

Bei in einen Halter eingelöteten Platten ist es nicht möglich, die dort eingelöteten Platten s-förmig zu verformen, d. h. konvex zu bearbeiten.
Dies setzt eine Entnahme der plattenförmigen Elemente und eine Bearbeitung dieser plattenförmigen Elemente außerhalb eines Halters voraus.
Aus diesem Grund ist die Schaffung eines Übergangs einer konvexen Schneidkante in eine konkave Spanleitstufe nicht ausführbar, wenn die genannten Teile bereits fest durch einen Lötvorgang verbunden in einem Bohrervorderteil angeordnet sind.
Stattdessen offenbart die vorliegende Erfindung eine Bohrplatte, welche nach der technischen Definition einer Bohrplatte plattenförmige Elemente aufweist, welche die Schneidkanten ausbilden und nachträglich eingebracht werden.

Mit der Druckschrift US 4,744,704 wird ein Bohrer mit eingelöteten Schneidplatten in einem Halter offenbart, wobei die Schneidkanten außerhalb des s-förmigen Mittenbereichs geradlinig ausgebildet sind.

Diese Druckschrift weist den Nachteil auf, dass die Schneidkanten nach dem s-förmigen Übergang des Mittenbereichs nicht konvex ausgebildet sind und in einen konkav ausgebildeten Spanableitungsbereich übergehen, um einen günstigen Spanbruch auszubilden.

Die in der vorbenannten Druckschrift offenbarten Schneidkanten sind ebenfalls nicht auswechselbar, da sie fest in einem Halter eingelötet sind, und der Halter selbst auswechselbar auf einem Bohrerschaft befestigt ist.

Diese vorbenannten Entgegenhaltungen weisen den wesentlichen Nachteil auf, dass die Schneidkanten der Schneidplatten geradlinig und nicht konvex verlaufen, wodurch ein langfließender Bohrspan entsteht, der relativ schwer über die gewendelte Spannut des Bohrers abfließt.

Der Erfindung liegt deshalb die Aufgabe zugrunde eine Bohrplatte zur spanabhebenden Bearbeitung von Materialien in einem Grundkörper derart weiterzubilden, dass der Spanbruch und die Spanableitung des Bohrspans verbessert wird.

Die Aafgche wird durch eine Bohrplatte gemäß Anspruch 1 gelöst.

Die Hauptschneide der Bohrplatte ist konvex ausgebildet und schneidet die Tangente des Bohrdurchmessers unter einem Winkel < 90°, so dass die relative Schnittbewegung in der äußeren Hälfte des Durchmesserbereiches eine "schälende" Wirkung aufweist.

Die Austrittskante der Bohrplatte ist dagegen konkav ausgebildet, um den Spanraum so groß wie möglich zu halten.

Die Spanfläche verläuft kontinuierlich von der konvexen Geometrie der Hauptschneide in die konkave Geometrie der Austrittskante über, so dass dadurch der Spanbruch gefördert und ein optimaler Spannfluss erreicht wird.

Die Erfindung liegt dem gemäß unter anderem in der Ausbildung einer konvexen Spanfläche an der Hauptschneide, welche den Spanbruch fördert und deren Übergang in eine konkave Austrittskante, welche die Spanabfuhr fördert.

Nach einer Weiterbildung der Erfindung bezüglich der Ausbildung der Bohrplatte wird noch beansprucht, dass eine besondere Ausspitzung (Spitze) an der vorderen Seite der Bohrplatte angeordnet ist.

Durch diese Maßnahmen werden die Kräfte reduziert und die Zentriereigenschaften optimiert, weil eine Spanform im Hinblick auf kurze Späne erzielt wird und an günstiger Spanabfluss erreicht wird.

Hierzu ist erfindungsgemäß vorgesehen, dass die Spanfläche ohne Kanten unter Beibehaltung des Spanwinkels kontinuierlich bis zur Bohrspitze verlängert beziehungsweise fortgeführt ist.

Es handelt sich also um eine verlängerte Spanfläche, die ohne Kanten und Stufen bis in die Spitze vorgeführt ist.

In einer Weiterbildung der Erfindungsidee ist vorgesehen, dass die Bohrplatte zur Befestigung am Grundkörper von mindestens einer Befestigungsschraube durchgriffen ist, welche die beiden Spannbacken im Grundkörper durchsetzt.

Die Befestigung der Bohrplatte in der drehend gelagerten Bohrplatte wird mittels einer Befestigungsschraube ausgeführt, wobei die Bohrplatte in einer Zentriernute zentriert ist, welche durch mindestens zwei einander gegenüberliegende Befestigungsbacken begrenzt ist, in deren Bereich mindestens eine Zentrierfläche zur zentrierenden Anlage an die Bohrplatte (1) angeordnet ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert in Seitenansicht ein Bohrwerkzeug;
- Figur 2:: die Draufsicht auf das Bohrwerkzeug;
- Figur 3:: perspektivisch die Unteransicht einer Bohrplatte;
- Figur 4:: der Grundkörper (Halter);
- Figur 5:: die Unteransicht der Bohrplatte;
- Figur 6:: perspektivische Seitenansicht der Bohrplatte;
- Figur 7:: eine ähnliche Unteransicht der Bohrplatte wie Figur 6;
- Figur 8:: eine Einzelheit A aus der Darstellung in Figur 7;

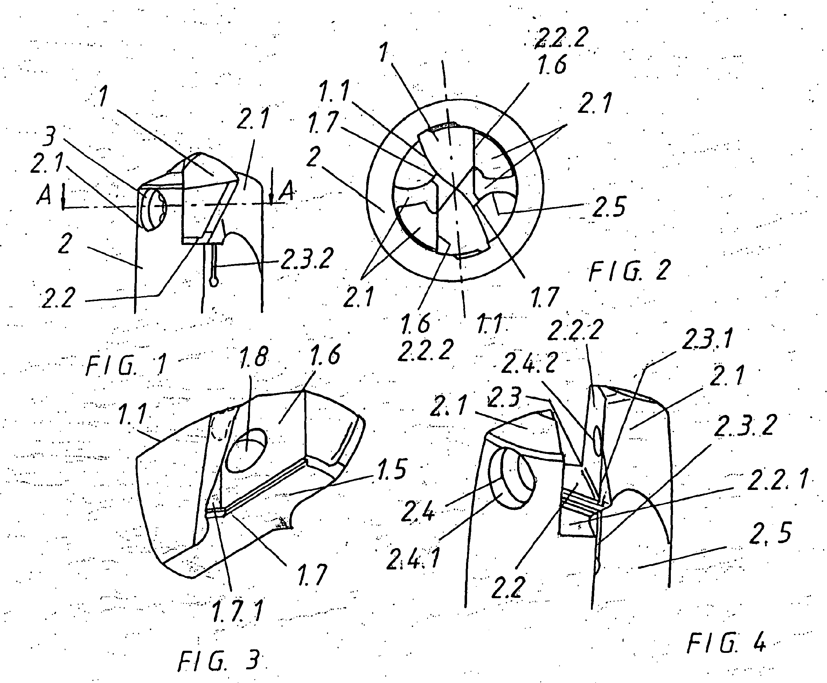

In Figur 1 ist allgemein ein Bohrwerkzeug dargestellt, bestehend aus einem Grundkörper 2, der eine nach oben geöffnete Befestigungsnute 2.2 ausbildet, deren Anschlagflächen 2.2.2 parallel zueinander ausgerichtet sind.

Die Anschlagflächen 2.2.2 sind spiegelsymmetrisch mittig zu einer Mittenlängsachse durch den Grundkörper 2 ausgebildet.

Selbstverständlich ist es in einer anderen Ausgestaltung auch möglich, diese Anschlagflächen 2.2.2 leicht konisch auszubilden, wobei allerdings dann die Lastübertragung verschlechtert wird.

Am Grund der Zentriernute 2.3 ist ein Klemmschlitz 2.3.2 angeordnet, der sich in das Material des Grundkörpers in axialer Richtung nach unten erstreckt.

Dieser Klemmschlitz kann bei Bedarf an seiner in den Grundkörper endenden Seite mit einer erweiternden Bohrung versehen werden.

Die Befestigungsnute 2.2 wird demgemäss durch zwei einander gegenüberliegende und spiegelbildlich zueinander ausgebildete Befestigungsbacken 2.1 im Grundkörper 2 definiert.

Die Figur 2 zeigt eine Draufsicht auf das Bohrwerkzeug mit einer Draufsicht auf die dort eingespannte Bohrplatte 1.

Es ist erkennbar, dass an der Bohrplatte 1 seitliche und diametral einander gegenüberliegende Zentrierflügel 1.7 angeformt sind, die sich an zugeordneten Zentrierflächen 2.3.1 im Bereich der Zentriernuten 2.3 der Befestigungsbacken 2.1 anlegen.

Man sieht ferner die diametral einander gegenüberliegenden Hauptschneiden 1.1 der Bohrplatte 1. Diametral gegenüberliegend von den Zentrierflügeln 1.7 werden die Hauptanlageflächen zwischen der Bohrplatte und den zugeordneten Flächen des Grundkörpers 2 ausgebildet.

Wichtig ist im Übrigen, dass die Spanfläche 1.2 der Bohrplatte 1 in die Zentrierflügel 1.7 übergeht, um den Grundkörper in diesem Bereich gegen Erosion durch ablaufende Späne zu schützen.

In Figur 3 ist die fußseitige Ansicht einer Bohrplatte 1 dargestellt, mit Ansicht der axialen, fußseitigen Auflagefläche 1.5. Es ist dargestellt, dass die erfindungsgemäßen Zentrierflügel 1.7 einander diametral gegenüberliegen und Zentrierflächen 1.7.1 ausgebildet sind.

Diese Zentrierflächen 1.7.1 sind etwa abgerundete, dreiecksförmige Flächen, die sich von der Fußseite (von der axialen Auflagefläche 1.5) schräg konisch nach oben zulaufend erstrecken.

Die wesentlichen, Drehmomente übertragenden Flächen sind jedoch die Anschlagflächen 1.6, die sich großflächig von der axialen Auflagefläche 1.5 nach oben erstrecken und die jeweils von der Befestigungsbohrung 1.8 durchsetzt sind.

Die Figur 4 zeigt die perspektivische Ansicht des Grundkörpers 2 mit Ausbildung der Zentriernute 2.3 und den vorher erwähnten etwa parallel zueinander angeordneten und bezüglich einer axialen Mittenlängsrichtung symmetrischen Anschlagflächen 2.2.2. Diese Anschlagflächen 2.2.2 wirken mit den zugeordneten Anschlagflächen 1.6 der Bohrplatte 1 zusammen.

Ferner ist erkennbar, dass die Befestigungsbohrung 2.4 in der einen (linken) Befestigungsbacke 2.1 eine Kopfsenkung 2.4.1 aufweist, während in der gegenüberliegenden (rechten) Befestigungsbacke 2.1 ein Gewinde 2.4.2 ausgebildet ist.

Die vorher erwähnten Zentrierflügel 1.7 legen sich hierbei an den etwa spitzwinklig ausgebildeten Zentrierflächen 2.3.1 im Bereich der Zentriernute 2.3 an.

Die Figur 4 zeigt im Übrigen, dass sich der Klemmschlitz 2.3.2 vom Grund der Zentriernute 2.3 axial nach unten in das Materials des Grundkörpers 2 erstreckt.

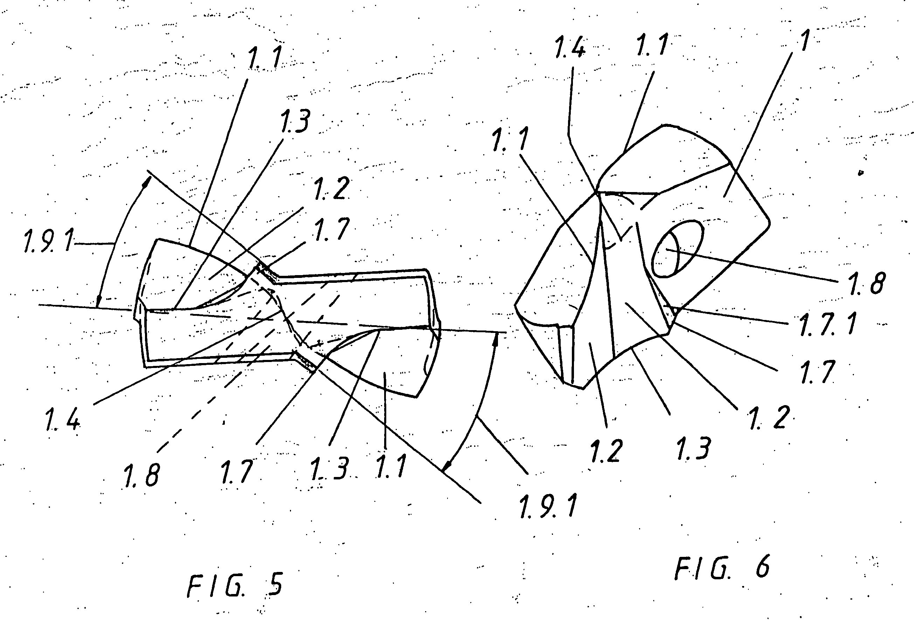

Die Figuren 5 und 6 zeigen weitere Einzelheiten der Bohrplatte 1. Es ist erkennbar, dass diametral gegenüberliegende Hauptschneiden 1.1 angeordnet sind, die S-förmig ineinander übergehen und hierbei die Ausspitzung 1.4 überqueren oder durchsetzen.

Die Hauptschneiden 1.1 bilden also zwei konvexe Schneidflächen, die in der Draufsicht eine S-Form bilden.

Dem gegenüberliegend sind die Austrittskanten 1.3 für die Spanflächen 1.2 vorgesehen, die insgesamt gemäß Figur 5 konkav ausgebildet sind.

Zwar zeigt die Figur 6, dass sich die Spanfläche 1.2 auf beiden Seiten einer etwa vertikal verlaufenden Kante erstreckt. Diese Kante ist jedoch nur aus zeichnerischen Gründen vorhanden. In Wirklichkeit ist die Spanfläche 1.2 eine durchgehend stetige, gekrümmte Fläche zur Ableitung der Späne, die sich von der Ausspitzung 1.4 nach unten in gleichmäßig und stetig gekrümmten Formen erstreckt.

Die Zentrierflügel 1.7 bilden gemäß Figur 6 schräge Zentrierflächen 1.7.1 die mit den vorher erwähnten, ebenfalls schräg ausgebildeten und etwa spitzwinkelig geformten Zentrierflächen 2.3.1 im Grundkörper 2 zusammenwirken.

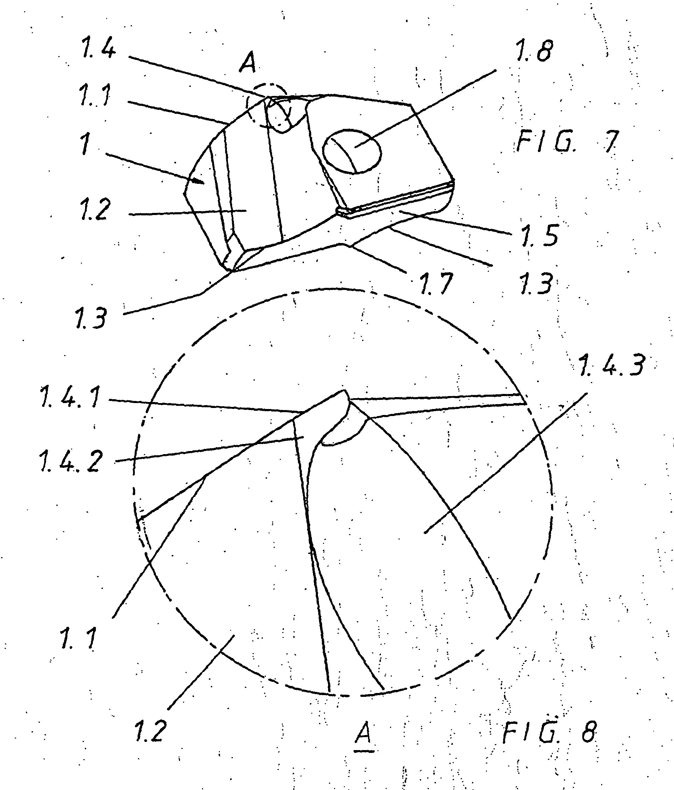

Die Figuren 7 und 8 zeigen weitere Einzelheiten der erfindungsgemäßen Bohrplatte 1.

Wichtig ist zunächst, dass sich die Schneide 1.4.1 gemäß Figur 8 von einer oberen Ausspitzung 1.4 erstreckt, die ihrerseits bündig in die Hauptschneide 1.1 übergeht. Hieraus ergibt sich, dass sich die Hauptschneide 1.1 bis in den Bereich der Ausspitzung 1.4 durch eine weitere Schneide 1.4.1 verlängert.

Ferner ist wesentlich, dass sich die vorher erwähnten Spanflächen 1.2 bis in den Bereich der Ausspitzung 1.4 erstrecken und zwar in Form verlängerter Spanflächen 1.4.2.

Seitlich neben den verlängerten Spanflächen 1.4.2 befinden sich verrundete Nebenflächen 1.4.3, welche insgesamt die Spanfläche 1.2 als vollständig abgerundete spanableitenden Fläche ausbilden, die keine störenden Kanten oder Vorsprünge aufweist.

Bei den Nebenflächen 1.4.3 handelt es sich um Nebenflächen der Ausspitzung 1.4.

### Zeichnungslegende

1. Bohrplatte
   1.1. Hauptschneide
   1.2. Spanfläche
   1.3. Austrittskante
   1.4. Ausspitzung
      1.4.1. Schneide
      1.4.2. Verlängerte Spanfläche
      1.4.3. Verrundete Nebenflächen
   1.5.Axiale Auflagefläche
   1.6. Anschlagfläche
   1.7.Zentrierflügel
      1.7.1. Zentrierfläche
   1.8. Befestigungsbohrung
      1.9.1 Zentrierwinkel
2. Grundkörper
   2.1. Befestigungsbacken
   2.2. Befestigungsnute
      2.2.1. Axiale Auflagefläche
      2.2.2. Anschlagfläche
   2.3. Zentriernute
      2.3.1. Zentrierfläche
      2.3.2. Klemmschlitz
   2.4. Befestigungsbohrung
      2.4.1. Kopfsenkung
      2.4.2. Gewinde
   2.5. Spannute

## Patentansprüche

1. Bohrplatte zur spanabhebenden Bearbeitung von Materialien mit einer klemmenden Befestigung in einem drehend angetriebenen Grundkörper (2), welche ein etwa plattenförmiges Element mit einer etwa S-förmig über eine Spitze verlaufenden Schneidkante aufweist, wobei zur Verbesserung der Spanableitung der Spanraum durch Übergang in eine konkave Austrittskante (1.3) vergrößert ist, **dadurch gekennzeichnet, dass** zur weiteren Verbesserung der Spanableitung die Hauptschneide (1.1) im gesamten Bereich der Bohrplatte (1) konvex geformt ist.

2. Bohrplatte nach Anspruch 1, **dadurch gekennzeichnet, dass** die Hauptschneide (1.1) der Bohrplatte (1) konvex ausgebildet und die Tangente des Bohrdurchmessers unter einem Winkel < 90° schneidet.

3. Bohrplatte nach Anspruch 1 oder 2, **dadurch gekennzeichnet, dass** die Spanfläche (1.2) kontinuierlich von der konvexen Geometrie der Hauptschneide (1.1) in die konkave Geometrie der Austrittskante (1.3) verläuft.

4. Bohrplatte nach einem der Ansprüche 1 bis 3, **dadurch gekennzeichnet, dass** sich die Hauptschneide (1.1) bis in den Bereich der Ausspitzung (1.4) kontinuierlich verlängert (1.4.1)und diametral gegenüberliegend angeordnet sind.

5. Bohrplatte nach einem der Ansprüche 1 bis 4, **dadurch gekennzeichnet, dass** sich die Spanflächen (1.2) bis in den Bereich der Ausspitzung (1.4) kontinuierlich verlängern (1.4.2) wodurch die Spanflächen (1,2) übergangslos bis in den Bereich der Spitze fortgeführt werden.

6. Bohrplatte nach einem der Ansprüche 1 bis 6, **dadurch gekennzeichnet, dass** die Spanfläche (1.2) der Bohrplatte (1) in die Zentrierflügel 1.7 übergeht und den Grundkörper (2) in diesem Bereich gegen Erosion schützt.

7. Bohrplatte nach einem der Ansprüche 1 bis 5, **dadurch gekennzeichnet, dass** die Befestigung im Grundkörper (2) mittels einer Befestigungsschraube (3) ausgebildet ist, welche die Bohrplatte (1) in einer Zentriernute (2.3) zentriert, welche durch mindestens zwei einander gegenüberliegende Befestigungsbacken (2.1) begrenzt ist, in deren Bereich mindestens eine Zentrierfläche (2.3.1) zur zentrierenden Anlage an die Bohrplatte (1) angeordnet ist.

## Claims

1. Drilling insert for machining materials with a clamping fastening in a rotatably driven base body (2), which has an approximately plate-shaped element with a cutting edge extending approximately in an S-shape over a tip, the chip space being enlarged by passing into a concave outlet edge (1, 3) to improve the discharge of chips, **characterised in that** to further improve the discharge of chips, the main cutter (1.1) is convexly formed in the entire region of the drilling insert (1).

2. Drilling insert according to claim 1, **characterised in that** the main cutter (1.1) of the drilling insert (1) is convex and cuts the tangent of the drilling diameter at an angle < 90°.

3. Drilling insert according to claim 1 or 2, **characterised in that** the cutting face (1.2) extends continuously from the convex geometry of the main cutter (1.1) into the concave geometry of the outlet edge (1.3).

4. Drilling insert according to any one of claims 1 to 3, **characterised in that** the main cutters (1.1) are extended (1.4.1) continuously into the region of the point (1.4) and are arranged diametrically opposite.

5. Drilling insert according to any one of claims 1 to 4, **characterised in that** the cutting faces (1.2) extend continuously into the region of the point (1.4) so the chip faces (1.2) are continued seamlessly into the region of the tip.

6. Drilling insert according to any one of claims 1 to 6, **characterised in that** the cutting face (1.2) of the cutting insert (1) passes into the centring flank (1.7) and protects the base body (2) in this region against erosion.

7. Drilling insert according to any one of claims 1 to 5, **characterised in that** the fastening in the base body (2) is configured by means of a fastening screw (3), which centres the drilling insert (1) in a centring groove (2.3), which is limited by at least two opposing fastening jaws (2.1), in the region of which at least one centring face (2.3.1) is arranged for centring abutment on the drill insert (1).

## Revendications

1. Plaquette de foret pour l'usinage de matériaux par enlèvement de copeaux, avec une fixation par serrage dans un corps de base (2) entraîné en rotation, qui comporte un élément à peu près en forme de plaque avec une arête de coupe s'étendant à peu près en S sur une pointe, étant précisé que pour améliorer l'évacuation des copeaux, le dégagement pour copeaux est agrandi grâce à une transition qui mène à une arête de sortie concave (1.3),
**caractérisée en ce que** pour améliorer encore l'évacuation des copeaux, la lame principale (1.1) a une forme convexe dans toute la zone de la plaquette de foret (1) .

2. Plaquette de foret selon la revendication 1, **caractérisée en ce que** la lame principale (1.1) de la plaquette de foret (1) a une forme convexe et coupe la tangente du diamètre de perçage suivant un angle < 90°.

3. Plaquette de foret selon la revendication 1 ou 2, **caractérisée en ce que** la face de coupe (1.2) passe de manière continue de la géométrie convexe de la lame principale (1.1) à la géométrie concave de l'arête de sortie (1.3).

4. Plaquette de foret selon l'une des revendications 1 à 3, **caractérisée en ce que** les lames principales (1.1) sont prolongées (1.4.1) de manière continue jusque dans la zone de la partie amincie (1.4) et sont diamétralement opposées.

5. Plaquette de foret selon l'une des revendications 1 à 4, **caractérisée en ce que** les faces de coupe (1.2) se prolongent (1.4.2) de manière continue jusque dans la zone de la partie amincie (1.4), moyennant quoi elles s'étendent sans transition jusque dans la zone de la pointe.

6. Plaquette de foret selon l'une des revendications 1 à 6, **caractérisée en ce que** la face de coupe (1.2) de la plaquette de foret (1) se transforme en ailettes de centrage (1.7) et protège le corps de base (2) de l'érosion dans cette zone.

7. Plaquette de foret selon l'une des revendications 1 à 5, **caractérisée en ce que** la fixation dans le corps de base (2) est formée à l'aide d'une vis de fixation (3) qui centre la plaquette de foret (1) dans une rainure de centrage (2.3) délimitée par au moins deux mâchoires de fixation opposées (2.1) dans la zone desquelles est disposée au moins une surface de centrage (2.3.1) pour l'application centrée contre ladite plaquette de foret (1).
